# EUROPÄISCHE PATENTSCHRIFT

(11) **EP 0 921 168 B1**
(45) Veröffentlichungstag und Bekanntmachung des Hinweises auf die Patenterteilung: **19.01.2005**
(21) Anmeldenummer: 98120366.4
(22) Anmeldetag: 28.10.1998
(51) Int. Cl.: C09D 163/10, C09D 4/06, C08F 299/02

(54) **Strahlungshärtbare Massen auf Basis von Epoxid(meth)acrylaten**
Radiation curable products based on epoxy(meth)acrylates
Matièredurcissable par radiations à base de (meth)acrylates d'époxydes

(30) Priorität: 02.12.1997 DE 19753322
(43) Veröffentlichungstag der Anmeldung: 09.06.1999
(73) Patentinhaber: BASF AKTIENGESELLSCHAFT, 67056 Ludwigshafen (DE)
(72) Erfinder: Königer, Rainer Dr., 67061 Ludwigshafen (DE); Paulus, Wolfgang Dr., 55128 Mainz (DE); Reich, Wolfgang Dr., 67133 Maxdorf (DE); Beck, Erich Dr., 68526 Ladenburg (DE); Wolf, Lothar, 02991 Torno (DE)

(56) Entgegenhaltungen:
- EP-A- 0 037 054
- EP-A- 0 126 341
- EP-A- 0 127 766
- EP-A- 0 279 303
- EP-A- 0 511 860
- EP-A- 0 686 621
- DE-A- 4 228 293
- US-A- 5 395 900

## Beschreibung

### Beschreibung

Die Erfindung betrifft ein Gemisch von Acryl- oder Methacrylverbindungen, enthaltend 40 bis 95 Gew. -% Epoxid(meth)acrylate, bezogen auf die Gesamtmenge der Acryl- oder Methacryl-verbindungen, gekennzeichnet dadurch, daß das Gemisch erhältlich ist durch ein Verfahren mit den Verfahrensschritten
a) Veresterung von 1 bis 10-wertigen Hydroxylverbindungen mit mindestens 90 Mol.-% Acrylsäure oder Methacrylsäure, bezogen auf die vorhandenen Mole OH-Gruppen der Hydroxylverbindungen, in Gegenwart von anorganischen oder organischen Säuren oder sauren Ionenaustauschern bei einer Temperatur von 40 bis 120°C
b) danach gegebenenfalls Zusatz weiterer Acrylsäure oder Methacrylsäure und
c) anschließende Umsetzung der überschüssigen Acrylsäure oder Methacrylsäure mit Epoxiden, die 1 bis 5 Epoxidgruppen aufweisen, zu Epoxid(meth)-acrylaten in Gegenwart des Veresterungsprodukts von a) bei 80 bis 130°C.

Weiterhin betrifft die Erfindung ein Verfahren zur Herstellung der Gemische und strahlungshärtbaren Massen, welche die Gemische enthalten.

Strahlungshärtbare Massen auf Basis von Epoxid(meth)acrylaten sind bekannt. Da die Viskosität der Epoxid(meth)acrylate sehr hoch ist, werden häufig sog. Reaktivverdünner (niedrig-viskose, strahlungshärtbare Verbindungen) zugesetzt, um einen für die Anwendung, z.B. als Beschichtungsmasse, erforderlichen guten Verlauf zu erreichen. Gewünscht ist, die Menge an Reaktivverdünner gering zu halten.
Strahlungshärtbare Massen auf Basis von Epoxid(meth)acrylaten führen im allgemeinen zu harten, aber auch spröden Beschichtungen. Eine erhöhte Flexibilität und Elastizität neben einer hohen Härte wäre daher vorteilhaft.

Aus EP-A-126 341 und EP-A-127 766 sind Verfahren zur Veresterung von Acrylsäure oder Methacrylsäure mit Hydroxylverbindungen bekannt, bei denen die Acrylsäure oder Methacrylsäure im Überschuß eingesetzt wird. Die überschüssige (Meth)acrylsäure wird nicht entfernt, sondern mit Epoxiden umgesetzt. Das erhaltene Gemisch enthält daher untergeordnete Mengen an Epoxid(meth)acrylaten. Zweck des Verfahrens ist, (Meth)acrylsäure möglichst vollständig umzusetzen und eine notwendige Aufarbeitung zur Entfernung der (Meth)acrylsäure zu vermeiden

EP-A2-279 303 und EP-A 1-686 621 offenbart Verfahren zur Herstellung von (Meth)acrylsäureestern, in denen eine Hydroxyverbindung mit (Meth)acrylsäure verestert wird und das Reaktionsgemisch mit einer Epoxidverbindung umgesetzt wird.

Die so erhältlichen Gemische weisen lediglich einen geringen Gehalt an Epoxid(Meth)acrylaten auf.

EP-A1-37 054 beschreibt Beschichtungszusammensetzungen, enthaltend 50 - 98 Gew.-% eines bestimmten Epoxid(meth)acrylats.

Offenbart werden lediglich Abmischungen von reinen multifunktionellen Verbindungen mit Epoxid(meth)acrylaten, jedoch keine Reaktionsprodukte.

Aufgabe der vorliegenden Erfindung war demgegenüber, strahlungshärtbare Massen auf Basis von Epoxid(meth)acrylaten zur Verfügung zu stellen, wobei diese strahlungshärtbaren Massen eine möglichst geringe Viskosität aufweisen und Beschichtungen mit hoher Härte und guter Elastizität ergeben.

Demgemäß wurde das oben definierte Gemisch, ein Verfahren zu seiner Herstellung und strahlungshärtbare Massen, welche das Gemisch enthalten, gefunden.

Das erfindungsgemäße Gemisch enthält 40 bis 95 Gew. -%, bevorzugt 50 bis 95 Gew. -%, besonders bevorzugt 60 bis 95 Gew. -%, und ganz besonders bevorzugt 70 bis 95 Gew. -% Epoxidacrylate oder Epoxidmethacrylate (kurz Epoxid(meth)acrylate), bezogen auf die Gesamtmenge der Acryl- oder Methacrylverbindungen.

Statt 95 Gew. -% kann der maximale Gehalt an Epoxid(meth)acrylaten in den vorstehend angegebenen Gewichtsbereichen auch 90 Gew. -%, insbesondere 85 oder 80 Gew.-% betragen.

Als Epoxid(meth)acrylat gilt dabei eine Verbindung, die mindestens ein Umsetzungsprodukt einer Epoxidgruppe mit Acrylsäure oder Methacrylsäure enthält.

Das erfindungsgemäße Gemisch ist erhältlich durch das eingangs definierte Verfahren mit den Verfahrensschritten a) bis c).

Es handelt sich vorzugsweise um ein Eintopfverfahren, d. h. um ein Verfahren bei dem die Zwischenprodukte nicht isoliert werden.

Im Verfahrensschritt a) werden Hydroxylverbindungen mit Acrylsäure oder Methacrylsäure vorzugsweise im molaren Überschuß der Säure bezogen auf die Mole Hydroxygruppen verestert. Bevorzugt ist Acrylsäure.

Bei den Hydroxylverbindungen kann es sich z.B. um 1 bis 10 wertige, bevorzugt 1 bis 6 wertige, besonders bevorzugt 1 bis 5 wertige Alkohole handeln.

In Betracht kommen z.B. Monoalkohole mit 1, vorzugsweise 4 bis 20-C-Atomen, insbesondere Alkanole z.B. Butanol, 2-Ethylhexanol, Laurylalkohol, Cyclohexanol, Trimethylcyclohexanol, 2 Methyl-3-phenylpropanol, oder Alkoxylierungsprodukte, insbesondere Ethoxylierungs bzw. Propoxylierungsprodukte der Monoalkohole mit bis zu 10 Mol Ethylenoxid, Propylenoxid oder deren Gemische, bezogen auf 1 Mol Monoalkohol.

In Betracht kommen insbesondere auch mehrwertige Alkanole mit 2 bis 20 C-Atomen und 2 bis 6, vorzugsweise 2 bis 4 Hydroxylgruppen, sowie Alkoxylierungsprodukte, insbesondere Ethoxylierungs- bzw. Propoxylierungsprodukte dieser Alkanole mit bis zu 20 Mol, vorzugsweise bis zu 10 Mol besonders bevorzugt bis zu 5 Mol Alkylenoxid, z.B. Ethylenoxid, Propylenoxid oder deren Gemische bezogen auf 1 Mol des mehrwertigen Alkanols.

Genannt seien z.B. Ethylenglycol, Propylenglycol, Butandiol 1,4, Pentandiol 1,5, Neopentylglycol, Hexandiol-1,6, 2-Methylpentandiol 1,5, 2 Ethylbutandiol 1,4, Triole wie Glycerin, Trimethylolpropan, Trimethylolethan, Trimethylolbutan, Tetraole wie Pentaerythrit, Pentaole und Hexaole, z.B. Di-Trimethylolpropan und Di-Pentaerythrit, sowie die entsprechend Ethoxylierungs- bzw. Propoxylierungsprodukte dieser Alkohole.

Als Hydroxylverbindungen kommen auch Polyesterpolyole in Betracht, wie sie durch Umsetzung der vorstehenden mehrwertigen Alkohole, insbesondere von Diolen mit Polycarbonsäuren, insbesondere Dicarbonsäuren erhältlich sind.

Die Hydroxylverbindungen werden in Verfahrensschritt a) mit vorzugsweise mindestens 90 Mol %, besonders bevorzugt mit mindestens 110 Mol % Acrylsäure oder Methacrylsäure, bezogen auf die vorhandenen Mole OH-Gruppen der Hydroxylverbindungen verestert. Bevorzugt wird die Veresterung in Gegenwart eines sauren Veresterungskatalysators, in Gegenwart eines Kohlenwasserstoffs, der mit Wasser ein azeotropes Gemisch bildet und in Gegenwart eines Polymerisationsinhibitors durchgeführt.

Als saure Veresterungskatalysatoren dienen z.B. handelsübliche anorganische oder organische Säuren oder saure Ionenaustauscher, wobei Schwefelsäure und p-Toluolsulfonsäure bevorzugt sind. Sie werden im allgemeinen in Mengen von 0,1 bis 3 Gew. -%, bezogen auf das zu veresternde Gemisch aus (Meth)acrylsäure und Alkohol eingesetzt.

Die Veresterung kann in Substanz (lösemittelfrei) oder in einem Lösemittel erfolgen. Die Veresterung kann unter azeotropen Bedingungen bei erhöhter Temperatur erfolgen, im allgemeinen bei 40 bis 120°C, vorzugsweise bei 70 bis 115°C, wobei sich als Schleppmittel zur Entfernung des Reaktionswassers Kohlenwasserstoffe, wie aliphatische, cycloaliphatische oder aromatische Kohlenwasserstoffe oder Gemische derselben, vorzugsweise solche mit einem Siedebereich zwischen 70 und 120°C, als besonders geeignet erwiesen haben.

Geeignete aliphatische Kohlenwasserstoff sind z.B. Hexan und seine Isomeren sowie Kohlenwasserstoffgemische mit Siedebereich zwischen 60 und 95°C.
Besonders bevorzugte Schleppmittel sind Cyclohexan, Methylcyclohexan und Toluol. Die Menge des zugesetzten Kohlenwasserstoffs ist unkritisch; je nach verwendeter Apparatur kann die zugesetzte Gewichtsmenge zwischen der 0,1- und 2fachen Menge des Reaktionsgemisches aus (Meth)acrylsäure und Hydroxylverbindung variieren. Besonders vorteilhaft ist ein Verhältnis Reaktionsgemisch zu Kohlenwasserstoff von 1:0,20 bis 1:0,8.

Geeignete Polymerisationsinhibitoren sind z.B. solche auf Basis ein- und mehrwertiger Phenole wie beispielsweise p-Methoxyphenol, 2,6-Di-tert.-butyl-p-Kresol, Hydrochinonmonomethylether, Resorcinmonomethylether, ausserdem Verbindungen vom Typ des Thiodiphenylamins (=Phenothiazin) und Zinn-II-Verbindungen. Vorteilhaft sind Kombinationen aus Phenolverbindung, Phenothiazin und gegebenenfalls Zinn II-Verbindungen. Die Verbindungen auf Phenolbasis werden vorzugsweise in Mengen von 0,05 bis 1 %, die Zinn-II-verbindung in Mengen von 0,01 bis 1 % Sn und Phenothiazin in Mengen von 0,001 bis 0,1 % eingesetzt, jeweils bezogen auf das Veresterungsgemisch aus OH-Komponente und (Meth)acrylsäure.

Nach der Veresterung kann das Lösungsmittel, z.B. der Kohlenwasserstoff, aus dem Reaktionsgemisch destillativ, gegebenenfalls unter vermindertem Druck, entfernt werden. Der Veresterungskatalysator kann in geeigneter Weise neutralisiert werden, z.B. durch Zusatz von tertiären Aminen oder Alkalihydroxyden.

Im Verfahrensschritt b) wird dann gegebenenfalls weitere Acrylsäure oder Methacrylsäure zugesetzt.

Insgesamt beträgt die Menge Acrylsäure bzw. Methacrylsäure beim erfindungsgemäßen Verfahren vorzugsweise mindestens 120 Mol-%, besonders bevorzugt mindestens 135 Mol-% ganz besonders bevorzugt mindestens 150 Mol-%, bezogen auf die insgesamt vorhandenen Mole OH-Gruppen der Hydroxylverbindungen.

Im allgemeinen beträgt die Gesamtmenge an Acrylsäure oder Methacrylsäure maximal 400 Mol-%, insbesondere maximal 350 Mol-%, ganz besonders bevorzugt maximal 300 Mol-%.

Die Menge an Acrylsäure bzw. Methacrylsäure wird so bemessen, daß der gewünschte Gehalt an Epoxid(meth)acrylaten erreicht wird.

Die Gesamtmenge Acrylsäure bzw. Methacrylsäure kann auch bereits vollständig in Verfahrensschritt a) eingesetzt werden. Bevorzugt wird bei dem erfindungsgemäßen Verfahren Acrylsäure verwendet. Im Verfahrensschritt c) erfolgt dann die Umsetzung mit den Epoxiden zu Epoxid(meth)acrylaten.

Bevorzugte Epoxide haben 1 bis 5, besonders bevorzugt 1 bis 3, insbesondere 2 Epoxidgruppen. Das Molekulargewicht derartiger Verbindungen liegt vorzugsweise unter 2000 g/Mol, insbesondere unter 1100 g/Mol, und besonders bevorzugt unter 500 g/Mol. Geeignet sind insbesonder Epoxide mit einer aromatischen Gruppe, vorzugsweise einer Diphenylgruppe.

Als Epoxide kommen z.B. epoxidierte Olefine, Glycidylester von gesättigten oder ungesättigten Carbonsäuren oder Glycidylether aliphatischer oder aromatische Polyole in Betracht. Derartige Produkte werden im Handel in großer Zahl angeboten. Besonders bevorzugt sind Polyglycidylverbindungen von Bisphenol A und Glycidylether mehrfunktioneller Alkohole, z.B. des Butandiols, des Glycerins und des Pentaerythrits. Beispiele für derartige Polyepoxidverbindungen sind ®Epikote 812 (Epoxidwert: ca. 0,67) und Epikote 828 (Epoxidwert: ca. 0,53) und Epikote 162 (Epoxidwert: ca. 0,61) der Firma Shell.

Im einzelnen genannt seien folgende Epoxidverbindungen:

### Monoepoxide

Cyclohexenoxid, Cyclopentenoxid, 1,2-epoxy-p-vinylcyclohexan

### Diepoxide

4-Vinyl-1-cyclohexendiepoxid
1,4 Cyclohexan dimethanol diglycidylether
1,4 Butandioldiglycidylether
Neopentylglykoldiglycidylether
3-(Bis(glycidyloxymethyl)methoxy)-1,2-propandiol
Diglycidyl 1,2,3,6-Tetrahydrophthalat
3,4 Epoxycyclohexyl methyl-3,4 expoxy-cyclohexan carboxylat
3,4 Epoxy-6-methylcyclohexylmethyl 3,4-6-methylcyclohexancarboxylat
Diglycidyl-1,2, cyclohexan dicarboxylat
Bis (3,4-Epoxycyclohexylmethyl)adipat
2,-(3,4-Epoxycyclohexyl-5,5 spiro-3,4-expoxy)cyclohexan-meta dioxan
Bisphenol-A-diglycidylether
Bisphenol-F-diglycidylether
Bisphenol-H-diglycidylether

### Triepoxide

### Pentaerythrittriglycidylether

In Betracht kommen auch Polymere, bzw. Oligomere der vorstehenden Verbindungen.

Die Umsetzung mit den Epoxidverbindungen zu Epoxid(meth)acrylaten erfolgt bevorzugt bei 80 bis 130, besonders bevorzugt bei 90 bis 110°C und wird vorzugsweise so lange durchgeführt, bis das Reaktionsgemisch eine Säurezahl unter 10, besonders bevorzugt unter 5 mg KOH/g aufweist.

Als Katalysator für die Umsetzung in Schritt c) können z.B. quartäre Ammonium- oder Phosphoniumverbindungen verwendet werden.

Die nach dem erfindungsgemäßen Verfahren erhältlichen Gemische eignen sich insbesondere zur Verwendung als Massen, welche thermisch, bevorzugt aber durch energiereiche Strahlung gehärtet werden können.

Sie können verwendet werden als bzw. in Beschichtungsmassen, z.B. Lacken, Druckfarben oder Klebstoffen, als Druckplatten, als Formkörper, zur Herstellung von Photoresisten, in der Stereolithographie oder als Gießmassen z.B. für optische Linsen.

Zur Verwendung als oder in strahlungshärtbaren Massen können den strahlungshärtbaren Gemischen Zusatzstoffe wie Vernetzer, Verdicker, Verlaufsmittel oder Füllstoffe bzw. Pigmente etc. zugesetzt werden.

Die erfindungsgemäßen Gemische bzw. strahlungshärtbaren Massen können thermisch, vorzugsweise durch energiereiche Strahlung wie UV-Licht oder durch Elektronenstrahlen gehärtet werden.

Zur Strahlungshärtung durch UV-Licht werden üblicherweise Photoinitiatoren zugesetzt.

Als Photoinitiatoren in Betracht kommen z.B. Benzophenon und Derivate davon, wie z.B. Alkylbenzophenone, halogenmethylierte Benzophenone, Michlers Keton, sowie Benzoin und Benzoinether wie Ethylbenzoinether. Benzilketale wie Benzildimethylketal, Acetophenonderivate wie z.B. Hydroxy-2-methyl-1-phenylpropan-1-on und Hydroxycyclohexyl-phenylketon. Anthrachinon und seine Derivate wie Methylanthrachinon und insbesondere Acylphosphinoxide wie z.B. Lucirin® TPO (2,4,6-Trimethylbenzoyldiphenylphosphinoxid).

Die Photoinitiatoren, die je nach Verwendungszweck der erfindungsgemäßen Massen in Mengen zwischen 0,1 und 15 Gew. -%, vorzugsweise 1 bis 10 Gew. -%, bezogen auf die polymerisierbaren Komponenten, eingesetzt werden, können als einzelne Substanz oder, wegen häufiger vorteilhafter synergistischer Effekte, auch in Kombination miteinander verwendet werden.

Die erfindungsgemaßen Gemische weisen im Vergleich zu herkömmlichen Epoxid (meth) acrylat-reichen Gemischen eine niedrigere Viskosität auf. Weiterhin zeigen die mit den erfindungsgemäßen Gemischen erhaltenen Beschichtungen gute anwendungstechnische Eigenschaften, insbesondere eine gute Elastizität und Flexibilität und auch eine gute Härte.

### Beispiele

### I Herstellung von Acrylatverbindungen

### Gemisch Ia

Es wurden 320 g Tripropylenglykol (TPG) mit 288 g Acrylsäure verestert. Acrylsäure wurde im Überschuß eingesetzt. Als Veresterungskatalysator wurde 2,5 g H₂SO₄ eingesetzt. Als Schleppmittel 203 g Methylcyclohexan. Polymerisationsinhibitoren sind 0,5 g 2,6-tert. -butyl-p-Kresol, 1,5 g p-Methoxyphenol, 0,015 g Phenothiazin, 0,5 g Triphenylphosphit, 0,5 g H₃PO₂.
Veresterungstemperatur: 109 - 114°C
Veresterungszeit : 4,5 Stunden
Danach wurde 15 g 75 %ige Tetrabutylammoniumbromidlsg. zuge setzt. Jetzt wird unter vakuum und bei 75 - 110°C das Methylcyclohexan abdestilliert.
Danach wird mit 212 g Acrylsäure eine Säurezahl (SZ) von 240 eingestellt.
Die überschüssige Acrylsäure wird nun mit 540,5 g Epikote 828 (Bisphenol-A-diglycridether) umgesetzt. Temperatur: 100 - 105°C. Die Umsetzung wird solange durchgeführt bis SZ<6.
Das Endprodukt enthielt 73 Gew.-% Epoxidacrylate.
Der Gehalt an Epoxidacrylaten wurde bestimmt durch die Abnahme der Säurezahl.

### Gemisch 1b

Es wurden 320 g Tripropylenglykol (TPG) mit 288 g Acrylsäure verester. Acrylsäure wurde im Überschuß eingesetzt. Als Veresterungskatalysator wurde 2,5 g H₂SO₄ eingesetzt. Als Schleppmittel 203 g Methylcyclohexan. Polymerisationsinhibitoren sind 0,5 g 2,6-tert.-butyl-p-Kresol, 1,5 g p-Methoxyphenol, 0,015 g Phenothiazin, 0,5 g Triphenylphosphit, 0,5 g H₃PO₂.
Veresterungstemperatur: 105 - 110°C
Veresterungszeit: 5 Stunden
Danach wurde 15 g 75 %ige Tetrabutylammoniumbromidlsg. zugesetzt. Jetzt wird unter Vakuum und bei 75 - 110°C das Methylcyclohexan abdestilliert.
Danach wird mit 223 g Acrylsäure eine Säurezahl (SZ) von 260 eingestellt.
Die überschüssige Acrylsäure wird nun mit 557 g Epikote 828 umgesetzt. Temperatur: 100 - 105°C. Die Umsetzung wird solange durchgeführt bis SZ<6.

### Vergleich V1

Durch Mischen der Bestandteile wurde ein Gemisch aus 70 Gew. -% Tripropylenglycoldiacrylat (TPGDA) und 30 Gew. -% Bisphenol-A-diglycidyldiacrylat hergestellt

### Gemisch 2a

Es wurden 277 g Dipropylenglykol (DPG) mit 358 g Acrylsäure verester. Acrylsäure wurde im Überschuß eingesetzt. Als Veresterungskatalysator wurde 2,5 g H₂SO₄ eingesetzt. Als Schleppmittel 211 g Methylcyclohexan. Polymerisationsinhibitoren sind 0,5 g 2,6-tert. -butyl-p-Kresol, 1,5 g p-Methoxyphenol, 0,015 g Phenothiazin, 0,5 g Triphenylphosphit, 0,5 g H₃PO₂.
Veresterungstemperatur: 109 - 114°C
Veresterungszeit: 4 Stunden
Danach wurde 15 g 75 %ige Tetrabutylammoniumbromidlsg. zugesetzt. Jetzt wird unter Vakuum und bei 75 - 110°C das Methylcyclohexan abdestilliert.
Danach wird mit 188 g Acrylsäure eine Säurezahl (SZ) von 275 eingestellt.
Die überschüssige Acrylsäure wird nun mit 590 g Epikote 828 umgesetzt. Temperatur: 100 - 105°C. Die Umsetzung wird solange durchgeführt bis SZ<6.

### Gemisch 2b

Es wurden 277 g Dipropylenglykol (DPG) mit 358 g Acrylsäure verester. Acrylsäure wurde im Überschuß eingesetzt. Als Veresterungskatalysator wurde 2,5 g H₂SO₄ eingesetzt. Als Schleppmittel 211 g Methylcyclohexan. Polymerisationsinhibitoren sind 0,5 g 2,6-tert.-butyl-p-Kresol, 1,5 g p-Methoxyphenol, 0,015 g Phenothiazin, 0,5 g Triphenylphosphit, 0,5 g H₃PO₂.
Veresterungstemperatur: 105 -110°C
Veresterungszeit: 4,5 Stunden
Danach wurde 15 g 75 %ige Tetrabutylammoniumbromidlsg. zugesetzt. Jetzt wird unter Vakuum und bei 75 - 110°C das Methylcyclohexan abdestilliert.
Danach wird mit 249 g Acrylsäure eine Säurezahl (SZ) von 315 eingestellt.
Die überschüssige Acrylsäure wird nun mit 729 g Epikote 828 umgesetzt. Temperatur: 100 - 105°C. Die Umsetzung wird solange durchgeführt bis SZ<6.

### Vergleich V2

Durch Mischen wurde ein Gemisch aus 70 Gew. -% DPGDA und 30 Gew. -% Epa 520 hergestellt

### II Anwendurigstechnische Prüfung

Die Pendelhärte wurde nach DIN 53157 bestimmt und ist ein Maß für die Härte der Beschichtung. Die Angabe erfolgt in Sekunden (S), wobei hohe Werte, hohe Härte bedeuten.

Die Erichsentiefung wurde nach DIN 53156 bestimmt und ist ein Maß für die Flexibilität, Elastizität. Die Angabe erfolgt in Millimeter (mm), wobei hohe Werte, hohe Flexibilität bedeuten.

Als Maß für die Reaktivität gilt die Bandgeschwindigkeit (m/min) mit der ein Flüssiglackfilm, aufgetragen auf weißem Papier, unter einer undotierten Quecksilber-Hochdrucklampe (leistung: 120 W/cm Lampenlänge; Lampenabstand zum Substrat 12 cm) durchgefahren werden kann, um eine gegenüber dem Fingernagel kratzfeste und haftende Beschichtung zu erhalten.
Die Flüssiglackfilme wurden mit einem 100 µm-Spiralrakel aufgetragen.

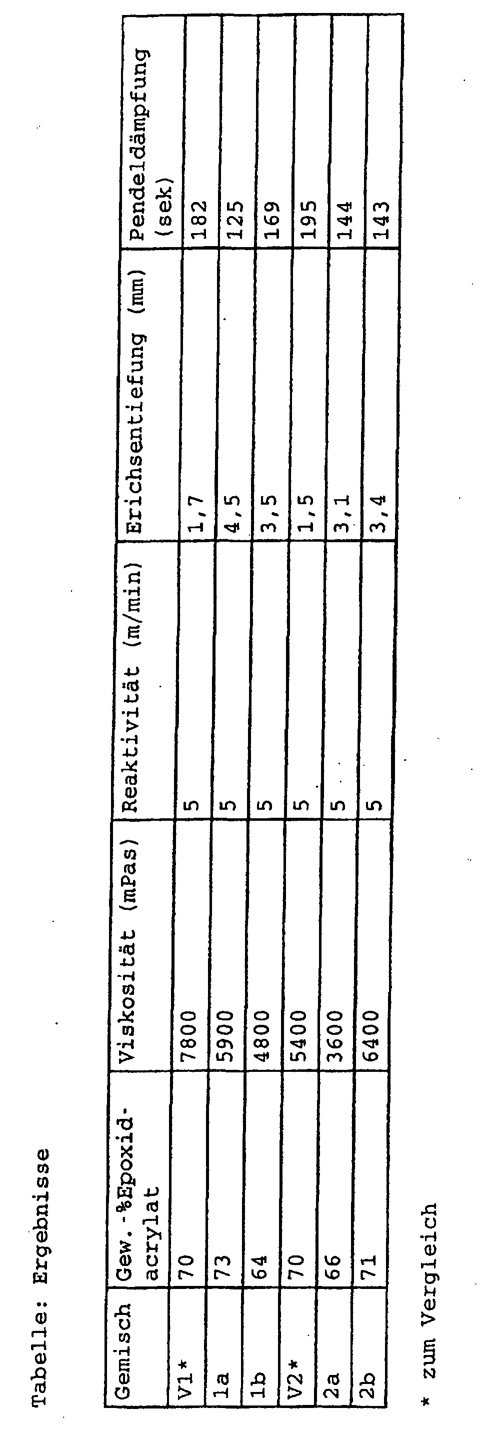

## Patentansprüche

1. Gemisch von Acryl- oder Methacrylverbindungen, enthaltend 40 bis 95 Gew. -% Epoxid(meth)acrylate, bezogen auf die Gesamtmenge der Acryl- oder Methacryl-verbindungen, **gekennzeichnet dadurch, daß** das Gemisch erhältlich ist durch ein Verfahren mit den Verfahrensschritten
a) Veresterung von 1 bis 10-wertigen Hydroxylverbindungen mit mindestens 90 Mol.-% Acrylsäure oder Methacrylsäure, bezogen auf die vorhandenen Mole OH-Gruppen der Hydroxylverbindungen, in Gegenwart von anorganischen oder organischen Säuren oder sauren Ionenaustauschern bei einer Temperatur von 40 bis 120°C
b) danach gegebenenfalls Zusatz weiterer Acrylsäure oder Methacrylsäure und
c) anschließende Umsetzung der überschüssigen Acrylsäure oder Methacrylsäure mit Epoxiden, die 1 bis 5 Epoxidgruppen aufweisen, zu Epoxid(meth)acrylaten in Gegenwart des Veresterungsprodukts von a) bei 80 bis 130°C.

2. Gemisch gemäß Anspruch 1, **dadurch gekennzeichnet, daß** im Verfahrensschritt b) weitere Acrylsäure oder Methacrylsäure zugesetzt wird.

3. Gemisch gemäß Anspruch 1 oder 2, **dadurch gekennzeichnet, daß** der Gehalt an Epoxid(meth)acrylaten 70 bis 95 Gew.-% beträgt

4. Gemisch gemäß Anspruch 1,2 oder 3, **dadurch gekennzeichnet, daß** es sich bei den Epoxiden unter c) um Epoxide mit 2 bis 4 Epoxidgruppen handelt

5. Gemisch gemäß einem der Ansprüche 1 bis 4, **dadurch gekennzeichnet, daß** es sich bei den Epoxiden unter c) um Epoxide mit mindestens einer aromatischen Gruppe und einem Molgewicht unter 500 g/mol handelt

6. Gemisch gemäß einem der Ansprüche 1 bis 5, **dadurch gekennzeichnet, daß** es sich bei den (Meth)acrylaten um Ester der Acrylsäure oder Methacrylsäure mit ein- bis sechswertigen Alkoholen handelt

7. Verfahren zur Herstellung eines Gemischs von Acryl- oder Methacrylverbindungen, enthaltend 40 bis 95 Gew. -% Epoxid(meth)acrylate, bezogen auf die Gesamtmenge der Acryloder Methacrylverbindungen, **gekennzeichnet dadurch, daß** das Gemisch erhalten wird durch die Verfahrensschritte
a) Veresterung von Hydroxylverbindungen Acrylsäure oder Methacrylsäure
b) danach gegebenenfalls Zusatz weiterer Acrylsäure oder Methacrylsäure und
c) anschließende Umsetzung mit Epoxiden zu Epoxid(meth)acrylaten

8. Verwendung von Gemischen gemäß einem der Ansprüche 1 bis 6 als strahlungshärtbare Massen

9. Strahlungshärtbare Massen, enthaltend ein Gemisch gemäß einem der Ansprüche 1 bis 6.

10. Verfahren zur Härtung von strahlungshärtbaren Massen, **dadurch gekennzeichnet, daß** eine strahlungshärtbare Masse gemäß Anspruch 9 mit energiereichen Licht oder Elektronenstrahlen gehärtet wird.

## Claims

1. Mixture of acrylic or methacrylic compounds, comprising from 40 to 95% by weight, based on the total amount of the acrylic or methacrylic compounds, of epoxide (meth)acrylates, **characterized in that** the mixture is obtainable by a process comprising the process steps
a) esterification of monohydric to decahydric hydroxy compounds with at least 90 mol% of acrylic acid or methacrylic acid, based on the moles of OH groups present in the hydroxyl compounds, in the presence of inorganic or organic acid or acidic ion exchangers at a temperature of from 40 to 120°C,
b) then optionally addition of further acrylic acid or methacrylic acid and
c) subsequent reaction of the excess acrylic acid or methacrylic acid with epoxides which have from 1 to 5 epoxide groups to give epoxide (meth)acrylates in the presence of the esterification product of a) at from 80 to 130°C.

2. Mixture according to Claim 1, **characterized in that** further acrylic acid or methacrylic acid is added in process step b).

3. Mixture according to Claim 1 or 2, **characterized in that** the content of epoxide (meth)acrylates is from 70 to 95% by weight.

4. Mixture according to Claim 1, 2 or 3, **characterized in that** the epoxides under c) are epoxides having from 2 to 4 epoxide groups.

5. Mixture according to any of Claims 1 to 4, **characterized in that** the epoxides under c) are epoxides having at least one aromatic group and a molecular weight of less than 500 g/mol.

6. Mixture according to any of Claims 1 to 5, **characterized in that** the (meth)acrylates are esters of acrylic acid or methacrylic acid with monohydric to hexahydric alcohols.

7. Process for the preparation of a mixture of acrylic or methacrylic compounds, comprising from 40 to 95% by weight based on the total amount of acrylic or methacrylic compounds, of epoxide (meth)acrylates, **characterized in that** the mixture is obtained by the process steps
a) esterification of hydroxy compounds with acrylic acid or methacrylic acid,
b) then optionally addition of further acrylic acid or methacrylic acid and
c) subsequent reaction with epoxides to give epoxide (meth)acrylates.

8. Use of mixtures according to any of Claims 1 to 6 as radiation-curable materials.

9. Radiation-curable materials comprising a mixture according to any of Claims 1 to 6.

10. Process for curing radiation-curable materials, **characterized in that** a radiation-curable material according to Claim 9 is cured with high-energy light or electron beams.

## Revendications

1. Mélange de composés acryliques ou méthacryliques, contenant 40 à 95 % en poids d'époxy(méth)acrylates, par rapport à la quantité totale des composés acryliques ou méthacryliques, **caractérisé en ce que** le mélange peut être obtenu par un procédé comportant les étapes
a) d'estérification de composés à 1 jusqu'à 10 fonctions hydroxyle avec au moins 90 moles % d'acide acrylique ou d'acide méthacrylique, par rapport aux moles présentes de groupes OH des composés hydroxyle, en présence d'acides inorganiques ou organiques ou d'échangeurs d'ions acides à une température de 40 à 120°C,
b) puis éventuellement d'addition d'acide acrylique ou d'acide méthacrylique supplémentaire, et
c) de réaction ultérieure de l'acide acrylique ou de l'acide méthacrylique excédentaire avec des époxydes qui présentent 1 à 5 groupes époxy, pour former des époxy-(méth)acrylates en présence du produit d'estérification de a), à 80 jusqu'à 130°C.

2. Mélange suivant la revendication 1, **caractérisé en ce que**, dans l'étape b) du procédé, on ajoute de l'acide acrylique ou de l'acide méthacrylique supplémentaire.

3. Mélange suivant l'une des revendications 1 et 2, **caractérisé en ce que** la teneur en époxy(méth)acrylates est de 70 à 95 % en poids.

4. Mélange suivant l'une des revendications 1, 2 et 3, **caractérisé en ce que**, en ce qui concerne les époxydes sous c), il s'agit d'époxydes comportant 2 à 4 groupes époxy.

5. Mélange suivant l'une des revendications 1 à 4, **caractérisé en ce que**, en ce qui concerne les époxydes sous c), il s'agit d'époxydes comportant au moins un groupe aromatique et présentant un poids moléculaire inférieur à 500 g/mole.

6. Mélange suivant l'une des revendications 1 à 5, **caractérisé en ce que**, en ce qui concerne les (méth)acrylates, il s'agit d'esters de l'acide acrylique ou de l'acide méthacrylique avec des alcools présentant une jusqu'à six fonctions.

7. Procédé de préparation d'un mélange de composés acryliques ou méthacryliques, contenant 40 à 95 % en poids d'époxy-(méth)acrylates, par rapport à la quantité totale des composés acryliques ou méthacryliques, **caractérisé en ce que** le mélange est obtenu par les étapes
a) d'estérification de composés hydroxyle avec de l'acide acrylique ou de l'acide méthacrylique,
b) puis éventuellement d'addition d'acide acrylique ou d'acide méthacrylique supplémentaire, et
c) de réaction ultérieure avec des époxydes pour former des époxy-(méth)acrylates.

8. Utilisation de mélanges suivant l'une des revendications 1 à 6, comme masses durcissables à un rayonnement.

9. Masses durcissables à un rayonnement, contenant un mélange suivant l'une des revendications 1 à 6.

10. Procédé de durcissage de masses durcissables à un rayonnement, **caractérisé en ce qu'**une masse durcissable à un rayonnement suivant la revendication 9 est durcie par de la lumière à haute énergie ou des faisceaux électroniques.
